(19) **Europäisches Patentamt / European Patent Office / Office européen des brevets**

(11) **EP 4 527 028 B1**

(12) **FASCICULE DE BREVET EUROPEEN**

(45) Date de publication et mention
de la délivrance du brevet:
**29.04.2026 Bulletin 2026/18**

(21) Numéro de dépôt: **23727016.0**

(22) Date de dépôt: **17.05.2023**

(51) Classification Internationale des Brevets (IPC):
**H04B 10/116** $^{(2013.01)}$

(52) Classification Coopérative des Brevets (CPC):
**H04B 10/116**

(86) Numéro de dépôt international:
**PCT/EP2023/063398**

(87) Numéro de publication internationale:
**WO 2023/222837 (23.11.2023 Gazette 2023/47)**

(54) **SYNCHRONISATION D'UN RÉCEPTEUR AVEC UN ÉMETTEUR POUR UNE COMMUNICATION PAR LUMIÈRE VISIBLE**

SYNCHRONISATION EINES EMPFÄNGERS MIT EINEM SENDER ZUR KOMMUNIKATION MIT SICHTBAREM LICHT

SYNCHRONISATION OF A RECEIVER WITH A TRANSMITTER FOR VISIBLE LIGHT COMMUNICATION

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **20.05.2022 FR 2204834**

(43) Date de publication de la demande:
**26.03.2025 Bulletin 2025/13**

(73) Titulaire: **Institut National de Recherche en Informatique et en Automatique
78150 Le Chesnay (FR)**

(72) Inventeurs:
• **EFIMOV, Denis**
  **78150 LE CHESNAY (FR)**
• **LOSCRI, Valeria**
  **78150 LE CHESNAY (FR)**
• **COSTANZO, Antonio**
  **78150 LE CHESNAY (FR)**
• **USHIROBIRA, Rosane**
  **78150 LE CHESNAY (FR)**

(74) Mandataire: **Vidon Brevets & Stratégie
16B, rue de Jouanet
35700 Rennes (FR)**

(56) Documents cités:
**US-A1- 2017 373 752     US-A1- 2022 131 614**

• **CANYELLES-PERICAS PEP ET AL: "Chaos synchronization on Visible Light Communication with application for secure data communications", 2013 AFRICON, IEEE, 9 September 2013 (2013-09-09), pages 1 - 5, XP032574572, ISSN: 2153-0025, ISBN: 978-1-4673-5940-5, [retrieved on 20140305], DOI: 10.1109/AFRCON.2013.6757743**
• **SHLOMI ARNON: "The Effect of Clock Jitter in Visible Light Communication Applications", JOURNAL OF LIGHTWAVE TECHNOLOGY, IEEE, USA, vol. 30, no. 21, 1 November 2012 (2012-11-01), pages 3434 - 3439, XP011469389, ISSN: 0733-8724, DOI: 10.1109/JLT.2012.2220956**

**Description**

Le domaine de l'invention se rapporte à la synchronisation d'un récepteur avec un émetteur dans le contexte d'une communication par lumière visible.

La communication par lumière visible (plus connue sous l'acronyme anglophone VLC pour « *Visible Light Communication* ») est une technologie de communication optique sans fil reposant sur l'utilisation d'une lumière dont la longueur d'onde est comprise entre 380 et 780 nm. Cette technologie confère aux diodes électroluminescentes (souvent désignées par l'acronyme anglophone LEDs pour « *light-emitting diodes* ») une fonction supplémentaire en plus de l'éclairage : la communication.

La communication par lumière visible a permis le développement de la technologie Li-Fi (pour « *Light Fidelity* ») qui consiste à exploiter la partie visible du spectre électromagnétique, contrairement à la Wi-Fi qui en utilise la partie radio.

Dans un système de communication de type VLC, l'émetteur comprend une source lumineuse, typiquement une diode électroluminescente, agencée pour émettre une lumière incohérente. Un schéma de modulation classique consiste à moduler l'intensité de la source lumineuse - donc sa valeur réelle - qui est unipolaire et non négative. Le signal en bande de base module ainsi l'intensité de la fréquence porteuse plutôt que son amplitude ou sa phase. La démodulation est obtenue par détection directe de la porteuse optique au niveau du récepteur. Une photodiode est agencée pour absorber le signal émis par la source lumineuse et le transformer en signal électrique de manière à récupérer les données transportées. La modulation d'intensité combinée à la détection directe est souvent notée IM/DD (acronyme anglophone pour « *Intensity Modulation/Direct Detection* ») dans la littérature.

En particulier, la modulation d'impulsions en position (souvent désignée par l'acronyme anglophone PPM pour « *pulse-position modulation* ») est généralement utilisée dans une communication de type VLC. Une telle technique de modulation permet de transmettre un symbole en une seule impulsion codée à l'aide d'un alphabet préétabli de transitions possibles. Par ailleurs, la modulation d'impulsions en position nécessite un échantillonnage à intervalle de temps précis pour assurer un décodage des données et une minimisation des erreurs de transmission. Il est donc nécessaire d'ajuster l'horloge du récepteur au début de chaque symbole et donc de mettre en œuvre un procédé de synchronisation.

Cette synchronisation est mise en œuvre au niveau du récepteur en utilisant un signal périodique reçu en provenance de l'émetteur. Une telle synchronisation à l'initiative de l'émetteur et basée sur un contrôle asymétrique du récepteur peut être qualifiée de synchronisation maître-esclave. Cette séquence, appelée préambule lorsqu'elle est mise en œuvre préalablement à toute communication, permet de synchroniser le récepteur avec l'émetteur en une période de temps prédéterminée et ce malgré la présence de bruit.

Pour ce faire, il est connu d'avoir recours à une boucle de phase asservie (plus connue sous l'acronyme anglophone PLL pour « *phase-locked loop* ») pour asservir la phase d'un signal périodique généré par le récepteur à celle du signal périodique reçu en provenance de l'émetteur. Les performances de la boucle à phase asservie peuvent être améliorées en utilisant un détecteur de phase de type multiplicateur ou des filtres optimaux.

Le document « Chaos synchronization on Visible Light Communication with application for secure data Communications » de Canyelles-Pericas PEP et AI, référencé XP032574572, décrit un récepteur agencé pour communiquer par lumière visible et se synchroniser avec un émetteur.

Ces techniques, utilisées dans les systèmes de communication en général et pour les communications de type VLC en particulier, ne permettent toutefois pas d'aligner la phase du signal périodique généré par le récepteur avec celle du signal périodique reçu en provenance de l'émetteur avec une précision suffisante. Elles ne sont pas non plus satisfaisantes concernant la probabilité d'erreur de synchronisation et l'erreur de phase en régime permanent. Ces techniques sont particulièrement peu robustes lorsque le signal périodique émis par l'émetteur à destination du récepteur aux fins de synchronisation comprend un bruit élevé. Or la communication par lumière visible est par nature très exposée aux interférences et aux bruits causés par la pollution lumineuse omniprésente, notamment en milieu urbain, que ce soit à l'intérieur (éclairage artificiel) ou à l'extérieur (rayonnement solaire).

La présente invention vient améliorer la situation.

À ce titre, l'invention concerne un récepteur, agencé pour communiquer par lumière visible et se synchroniser avec un émetteur, comprenant :

- un photorécepteur, et
- un circuit de traitement agencé pour commander le récepteur selon un mode de communication et un mode de synchronisation.

Dans le mode de communication, le récepteur est agencé pour communiquer par lumière visible avec l'émetteur au moins par la réception de signaux lumineux visibles que le photorécepteur est agencé pour recevoir en provenance de l'émetteur.

Dans le mode de synchronisation, le récepteur est agencé pour se synchroniser avec l'émetteur par la génération d'impulsions périodiques de sortie à partir d'impulsions périodiques d'entrée émises par l'émetteur, les impulsions périodiques d'entrée et de sortie étant caractéristiques, respectivement pour l'émetteur et le récepteur, du comportement d'un oscillateur d'Andronov-Hopf.

Par ailleurs, dans le mode de synchronisation :

le photorécepteur est agencé pour recevoir un signal correspondant à une impulsion périodique d'entrée émise par l'émetteur et susceptible d'être corrompue par un bruit, et

le circuit de traitement est agencé pour perturber le comportement du récepteur avec une entrée de couplage générée à partir du signal reçu et pour générer une impulsion périodique de sortie par la mise en œuvre d'une boucle d'asservissement de l'impulsion périodique de sortie au signal reçu pour la synchronisation de la phase du récepteur avec celle de l'émetteur.

Dans un ou plusieurs modes de réalisation, le récepteur comprend en outre un filtre agencé pour appliquer un pré-traitement au signal reçu par le photorécepteur pour en diminuer le bruit.

Dans un ou plusieurs modes de réalisation, le comportement du récepteur est caractérisé par un état variant sensiblement selon l'équation différentielle ci-après :

$$\dot{x}_2(t) = Ax_2(t) + \omega k(1 - |x_2(t)|^2)x_2(t) + u_2(t)$$

avec :

$$A = \begin{bmatrix} 0 & \omega \\ -\omega & 0 \end{bmatrix}$$

où : - $x_2(t)$ est l'état du récepteur à un instant t, avec $x_2 \in \mathbb{R}^2$ : $x_2 = [x_{21}\ x_{22}]^T$,

- $\omega$ est la fréquence d'oscillation strictement positive,
- k est le gain d'attraction strictement positif, et
- $u_2(t)$ est l'entrée de couplage à l'instant t, avec $u_2 \in \mathbb{R}^2$.

Dans un ou plusieurs modes de réalisation, le circuit de traitement est agencé pour générer l'impulsion périodique de sortie ci-après :

$$y_2(t) = h\big(x_2(t)\big)$$

avec :

$$h: \xi \mapsto a\big(b - \tanh\big(\kappa(1 + \xi_1)\big)\big)$$

où : - $y_2(t)$ est l'impulsion périodique de sortie à l'instant t,

- a et b sont des réels strictement positifs caractérisant l'amplitude de l'impulsion périodique de sortie,
- $\kappa$ est un réel strictement positif caractérisant la largeur de l'impulsion périodique de sortie, et
- $\xi$ est un vecteur bidimensionnel quelconque : $\xi = [\xi_1\ \xi_2]^T$

Dans un ou plusieurs modes de réalisation, l'entrée de couplage perturbant le comportement du récepteur est le produit d'un gain de couplage et de la différence entre le signal reçu et l'impulsion périodique de sortie :

$$u_2(t) = L(y(t) - y_2(t))$$

où : - L est le gain de couplage, avec $L \in \mathbb{R}^2$,

- y(t) est le signal reçu par le récepteur à l'instant t, et
- $y_2(t)$ est l'impulsion périodique de sortie à l'instant t.

L'invention concerne également un système comprenant :

- un récepteur tel que décrit précédemment, et
- un émetteur avec lequel le récepteur est agencé, dans le mode de communication, pour communiquer par lumière visible et, dans le mode de synchronisation, pour se synchroniser.

Dans un ou plusieurs modes de réalisation, parmi l'émetteur et le récepteur, seul le comportement du récepteur est perturbé par l'autre, le comportement de l'émetteur étant caractérisé par un état variant sensiblement selon l'équation différentielle ci-après :

$$\dot{x}_1(t) = Ax_1(t) + \omega k(1 - |x_1(t)|^2)x_1(t)$$

où : $x_1(t)$ est l'état de l'émetteur à un instant t, avec $x_1 \in \mathbb{R}^2$ : $x_1 = [x_{11}\ x_{12}]^T$.

Dans un ou plusieurs modes de réalisation, l'émetteur est agencé pour émettre l'impulsion périodique d'entrée ci-après :

$$y_1(t) = h\big(x_1(t)\big)$$

où : $y_1(t)$ est l'impulsion périodique d'entrée à l'instant t,
de sorte que, dans le mode de synchronisation, le signal reçu par le photorécepteur en provenance de l'émetteur est le suivant :

$$y(t) = y_1(t) + v(t)$$

où : - y(t) est le signal reçu par le photorécepteur à l'instant t, et

- v(t) est un bruit borné à l'instant t, avec $|v(\tau)| \leq \bar{v}$ pour tout instant $\tau$.

Dans un ou plusieurs modes de réalisation, l'état caractérisant le comportement de l'émetteur vérifie la condition initiale ci-après :

$$|x_1(0)| = 1$$

L'état caractérisant le comportement du récepteur vérifie la condition initiale ci-après :

$$\sqrt{0,5} \leq |x_2(0)| \leq 1,144$$

Il existe une matrice symétrique réelle définie positive P, des réels strictement positifs $\alpha$, $\rho$ et $\gamma$ et un réel $\beta$ tels que :

$$(A - \beta LC)^T P + P(A - \beta LC) \leq -2\alpha P$$

$$-PL = C^T = [1\ 0]^T, P \leq \gamma I_2$$

avec :

$$e_1(\tanh\left(\kappa(1 + x_{11} - e_1)\right) - \tanh\big(\kappa(1 + x_{11})\big) - \frac{\beta}{\alpha}e_1) \leq 0$$

pour tout $x_{11} \in$ [-1, 1] et pour tout $e_1$ tel que $|e_1| \leq 2,15$,
et :

$$\frac{|L|^2}{\omega^2 k^2}(4a^2 + \bar{v}^2) \le \frac{1}{16}$$

où : - $P \in \mathbb{R}^{2\times 2}$,

- $I_2$ est la matrice identité d'ordre 2, et

- e est l'erreur de synchronisation du récepteur, avec $e \in \mathbb{R}^2$ : $e = x_1 - x_2 = [e_1\ e_2]^T$.

Par exemple :

$$\alpha = 0{,}01$$

$$\rho = 0{,}1$$

$$\beta = -10^{-5}$$

$$\gamma = 10^{-3}$$

$$\omega = {2\pi}/{T} \text{ avec } T = 4 \times 10^{-5}\ \text{s}$$

$$L = [-10^5\ 1]^T$$

$$\kappa = 5$$

Avantageusement, l'inégalité matricielle précédente est plus restrictive et vérifie :

$$(A - \beta LC)^T P + P(A - \beta LC) + \varrho C^T C \le -2\alpha P$$

avec :

$$\varrho = 2\left(\frac{2\gamma}{\alpha} + \frac{\rho}{\omega k}\right)|L|^2 a^2 \kappa^2$$

Dans un ou plusieurs modes de réalisation, le récepteur est agencé, dans le mode de communication, pour communiquer par lumière visible avec l'émetteur selon une modulation d'impulsions en position.

L'invention concerne aussi un procédé de synchronisation d'un récepteur avec un émetteur par la génération d'impulsions périodiques de sortie à partir d'impulsions périodiques d'entrée émises par l'émetteur, les impulsions périodiques d'entrée et de sortie étant caractéristiques, respectivement pour l'émetteur et le récepteur, du comportement d'un oscillateur d'Andronov-Hopf, le récepteur étant agencé, dans un mode de communication, pour communiquer par lumière visible avec l'émetteur.

Le procédé est mis en œuvre par le récepteur dans un mode de synchronisation et comprend :

- recevoir un signal reçu en provenance de l'émetteur, le signal correspondant à une impulsion périodique d'entrée émise par l'émetteur et susceptible d'être corrompue par un bruit,
- perturber le comportement du récepteur avec une entrée de couplage générée à partir du signal reçu, et
- générer une impulsion périodique de sortie par la mise en œuvre d'une boucle d'asservissement de l'impulsion périodique de sortie au signal reçu pour la synchronisation de la phase du récepteur avec la phase de l'émetteur.

Typiquement, le mode de synchronisation précède le mode de communication.

Enfin, l'invention concerne un programme informatique, comprenant des instructions pour la mise en œuvre du procédé décrit précédemment, lorsque les instructions sont exécutées par au moins un processeur.

D'autres caractéristiques, détails et avantages apparaîtront à la lecture de la description détaillée ci-après, et à l'analyse des dessins annexés, sur lesquels :

[Fig. 1] illustre un système de communication par lumière visible comprenant un émetteur et un récepteur selon l'invention ;

[Fig. 2] illustre un procédé de synchronisation, selon l'invention, du récepteur avec l'émetteur au sein du système illustré sur la [Fig. 1] ;

[Fig. 3] illustre l'erreur de phase en régime permanent en fonction du bruit pour différents procédés de synchronisation, dont celui faisant l'objet de l'invention illustré sur la [Fig. 2] ; et

[Fig. 4] illustre la probabilité d'erreur de synchronisation en fonction du bruit pour différents procédés de synchronisation, dont celui faisant l'objet de l'invention illustré sur la [Fig. 2].

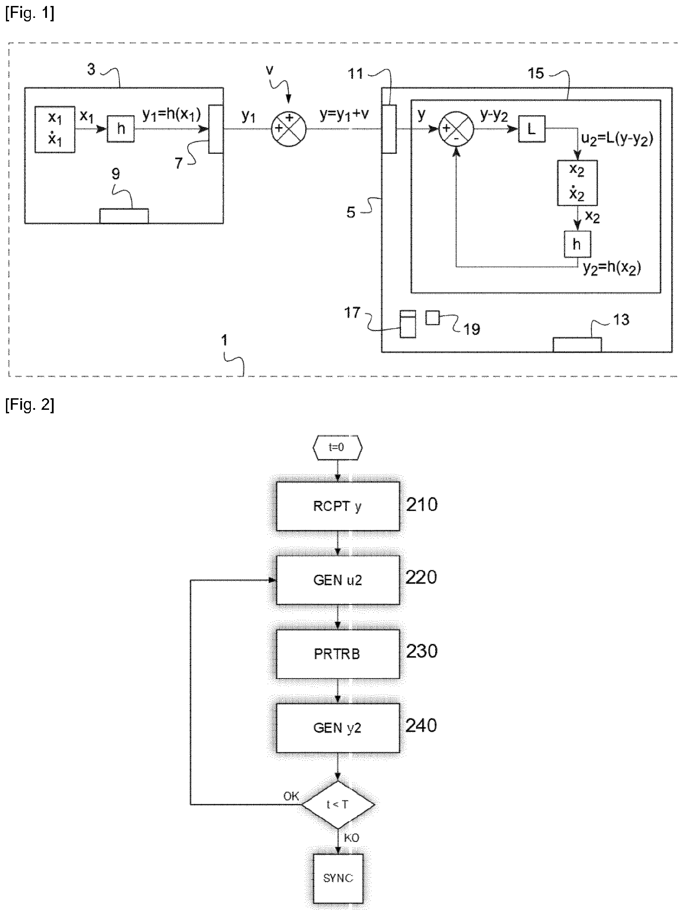

La [Fig. 1] illustre un système 1 de communication par lumière visible - ou VLC pour « *Visible Light Communication* ».

Le système 1 comprend un émetteur 3 et un récepteur 5 agencés pour communiquer par lumière visible, donc pour exploiter la partie du spectre correspondant à une longueur d'onde comprise environ entre 380 et 780 nm.

Dans le contexte de l'invention, l'émetteur 3 et le récepteur 5 peuvent désigner tout dispositif ou appareil apte à émettre de la lumière, que l'éclairage soit la fonction première d'un tel dispositif ou appareil - par exemple une lampe, un phare d'automobile ou un lampadaire - ou, à l'inverse, qu'une telle fonction d'éclairage soit secondaire - par exemple un écran de télévision ou un affichage commercial. Le principe même de la communication par lumière visible est en effet de tirer profit de la présence des sources lumineuses, notamment en milieu urbain, qui offrent autant de relais de communication pour satisfaire aux exigences d'ubiquité attendues pour la prochaine génération de systèmes de communication sans fil.

Comme illustré sur la [Fig. 1], l'émetteur 3 comprend une source lumineuse 7 et un photorécepteur 9.

La source lumineuse 7 est agencée pour émettre un signal lumineux transportant des données à destination, par exemple, du récepteur 5. Typiquement, la source lumineuse 7 comprend au moins une diode électroluminescente, c'est-à-dire une diode qui émet un rayonnement lumineux non cohérent par la recombinaison d'électrons et de trous lorsqu'elle est traversée par un courant électrique continu.

En plus d'être incohérente, la lumière émise par la diode électroluminescente est unipolaire et non négative. Bien entendu, la source lumineuse 7 peut comprendre une pluralité de diodes électroluminescentes. Aujourd'hui, les éclairages à LEDs sont présents dans presque tous les environnements, ce qui offre des perspectives de transmission de données à haut débit.

Le photorécepteur 9 est agencé pour recevoir un signal lumineux transportant des données en provenance, par exemple, du récepteur 5. Typiquement, le photorécepteur 9 comprend au moins une photodiode, c'est-à-dire un détecteur photoélectrique comprenant une diode à semi-conducteur qui produit un courant photoélectrique par absorption d'un rayonnement optique incident. Bien entendu, le photorécepteur 9 peut comprendre une pluralité de photodiodes.

Dans le cas d'une communication bilatérale entre l'émetteur 3 et le récepteur 5, le récepteur 5 comprend des moyens de communication similaires à ceux de l'émetteur 3, à savoir non seulement un photorécepteur 11, mais aussi une source lumineuse 13.

Le photorécepteur 11 du récepteur 5 peut être comparé à celui de l'émetteur 3 et comprend donc, par exemple, une ou plusieurs photodiodes. La source lumineuse 13 du récepteur 5 peut être comparée à celle de l'émetteur 3 et comprend donc, par exemple, une ou plusieurs diodes électroluminescentes.

Au sein du système 1, la communication par lumière visible entre l'émetteur 3 et le récepteur 5 fonctionne sur le principe d'une détection directe par modulation d'intensité. Dans un tel schéma de modulation, le signal en bande de base module l'intensité de la fréquence porteuse au niveau de la source lumineuse 7 de l'émetteur 3 et la démodulation est obtenue par détection directe de la porteuse optique au niveau du photorécepteur 11 du récepteur 5. Le photorécepteur 11 est agencé pour absorber le signal émis par la source lumineuse 7 et le transformer en signal électrique de manière à récupérer les données.

Il en est de même pour un signal lumineux émis par le récepteur 5 à destination de l'émetteur 3. L'intensité du signal est modulée au niveau de la source lumineuse 13 du récepteur 5 et la démodulation est mise en œuvre par le photorécepteur 9 au niveau de l'émetteur 3.

Concernant à présent la technique de modulation employée, le système 1 utilise par exemple la modulation d'impulsions en position qui est classique dans une communication de type VLC et permet de transmettre un symbole de N bits en une seule impulsion codée à l'aide d'un alphabet préétabli de $2^N$ transitions possibles.

Par ailleurs, le système 1 est configuré pour permettre une synchronisation entre l'émetteur 3 et le récepteur 5. Une telle synchronisation est d'autant plus importante que la modulation d'impulsions en position exige un échantillonnage à intervalle de temps précis pour assurer un décodage des données et une minimisation des erreurs de transmission, ce qui implique un ajustement de l'horloge du récepteur 5 au début de chaque symbole. Avantageusement, la synchronisation du récepteur 5 avec l'émetteur 3 intervient avant le début de la communication et la transmission des données pertinentes - on parle alors d'un préambule. La période de temps consacrée à la synchronisation est prédéterminée.

La présente invention propose une nouvelle approche basée sur la théorie du contrôle des systèmes dynamiques pour améliorer la synchronisation de l'émetteur 3 et du récepteur 5 en les considérant comme des systèmes dynamiques particuliers. En particulier, cette approche permet de diminuer la probabilité d'erreur de synchronisation et l'erreur de phase en régime permanent - respectivement appelées « *synchronization error probability* » et « *steady state phase error* » dans la littérature anglophone.

Plus précisément, le paradigme dans lequel l'émetteur 3 et le récepteur 5 sont chacun modélisés par un oscillateur, c'est-à-dire un système dynamique dont l'état varie périodiquement, repose sur l'hypothèse suivante : l'émetteur 3 et le récepteur 5 génèrent chacun des impulsions périodiques pour mettre en œuvre la synchronisation. L'impulsion périodique générée par l'émetteur 3 ou le récepteur 5 correspond alors à la sortie d'un oscillateur.

L'espace des phases - aussi appelé espace d'états - d'un oscillateur peut comprendre des trajectoires périodiques. Lorsqu'une telle trajectoire est localement attractive ou répulsive, on dit qu'elle forme un cycle limite. Les inventeurs ont découvert qu'il était avantageux de modéliser l'émetteur 3 et le récepteur 5 par des oscillateurs avec des cycles limites globalement attractifs, et plus particulièrement des oscillateurs d'Andronov-Hopf . De tels oscillateurs non linéaires ont fourni des solutions probantes à des problèmes de synchronisation dans des domaines très éloignés de la communication, notamment les comportements de systèmes chimiques ou biologiques. À titre d'exemple, les travaux de E. Panteley, A. Loría et A. El Ati, restitués dans l'article « Analysis and control of Andronov-Hopf oscillators with applications to neuronal populations » (2015 IEEE 54th Annual Conference on Decision and Control (CDC), p. 596-601), développent une analyse de populations neuronales basée sur des oscillateurs d'Andronov-Hopf.

Toujours en référence à la [Fig. 1], l'émetteur 3 est caractérisé par un état $x_1$ tandis que le récepteur 5 est caractérisé par un état $x_2$. L'émetteur 3 et le récepteur 5 sont chacun modélisés par un oscillateur d'Andronov-Hopf dont l'espace des phases est respectivement $(x_1, \dot{x}_1)$ et $(x_2, \dot{x}_2)$.

Dans un système comprenant plusieurs oscillateurs d'Andronov-Hopf couplés, l'état $x_i$ d'un oscillateur de ce système obéit sensiblement à une équation différentielle de la forme suivante :

$$\dot{x}_i(t) = Ax_i(t) + \omega k(1 - |x_i(t)|^2)x_i(t) + u_i(t)$$

avec :

$$A = \begin{bmatrix} 0 & \omega \\ -\omega & 0 \end{bmatrix}$$

où : - $x_i(t)$ est l'état de l'oscillateur à un instant t, avec $x_i \in \mathbb{R}^2$ : $x_i = [x_{i1} \ x_{i2}]^T$,

- $\omega$ est la fréquence d'oscillation strictement positive,
- $k$ est le gain d'attraction strictement positif, et
- $u_i(t)$ est une entrée de couplage à l'instant t, avec $u_i \in \mathbb{R}^2$.

L'entrée de couplage - aussi appelé « *diffusive coupling* » dans la littérature anglophone - correspond à la perturbation de l'espace des phases d'un oscillateur due à son interaction avec les autres oscillateurs du système.

Le système 1 illustré sur la [Fig. 1] est donc un système comprenant deux oscillateurs d'Andronov-Hopf : l'émetteur 3 dont l'état est $x_1$ (i = 1) et le récepteur 5 dont l'état est $x_2$ (i = 2).

L'impulsion périodique générée par l'émetteur 3 à un instant donné dépend de l'état $x_1$ de l'émetteur 3 à cet instant. De même, l'impulsion périodique générée par le récepteur 5 à un instant donné dépend de l'état $x_2$ du récepteur 5 à cet instant.

L'impulsion périodique générée par un oscillateur du système 1 - ici l'émetteur 3 ou le récepteur 5 - est déterminée comme suit :

$$y_i(t) = h\big(x_i(t)\big)$$

avec :

$$h : \xi \longmapsto a\big(b - \tanh\big(\kappa(1 + \xi_1)\big)\big)$$

où : - $y_i(t)$ est l'impulsion périodique générée par l'oscillateur à l'instant t,

- a et b sont des réels strictement positifs caractérisant l'amplitude de l'impulsion périodique,
- $\kappa$ est un réel strictement positif caractérisant la largeur de l'impulsion périodique, et
- $\xi$ est un vecteur bidimensionnel quelconque : $\xi = [\xi_1 \, \xi_2]^T$

On en déduit l'impulsion périodique générée à un instant t par l'émetteur 3 (i = 1) et le récepteur 5 (i = 2) :

$$y_1(t) = a\big(b - \tanh\big(\kappa(1 + x_{11}(t))\big)\big)$$

$$y_2(t) = a\big(b - \tanh\big(\kappa(1 + x_{21}(t))\big)\big)$$

L'impulsion périodique générée par l'émetteur 3 est destinée à être émise par la source lumineuse 7 et à être reçue par le photorécepteur 11 du récepteur 5 pour perturber le comportement du récepteur 5 sous la forme de l'entrée de couplage U2.

Avantageusement, la synchronisation mise en œuvre au sein du système 1 est une synchronisation maître-esclave. L'émetteur 3 - maître - génère puis émet des impulsions périodiques à destination du récepteur 5 - esclave - pour permettre à ce dernier de se synchroniser avec l'émetteur 3. Le récepteur 5 génère également des impulsions périodiques, mais ces impulsions périodiques sont utilisées à la seule fin de synchronisation avec l'émetteur 3 et ne sont donc pas transmises à celui-ci.

Par conséquent, parmi l'émetteur 3 et le récepteur 5, seul le comportement du récepteur 5 est perturbé par l'autre. Il n'y a à proprement parler pas d'interaction puisque seul l'émetteur 3 agit sur le récepteur 5. En assimilant l'émetteur 3 et le récepteur 5 à des oscillateurs d'Andronov-Hopf, on peut également dire que seul l'espace des phases du récepteur 5 est perturbé. L'équation différentielle décrivant l'évolution de l'état $x_1$ de l'émetteur 3 peut ainsi être écrite comme suit en prenant en considération le fait que l'entrée de couplage $u_1$ est identiquement nulle :

$$\dot{x}_1(t) = A x_1(t) + \omega k(1 - |x_1(t)|^2)x_1(t)$$

Cette équation différentielle met en évidence deux ensembles compacts et invariants de l'émetteur 3, à savoir l'origine ($x_1 = 0$) et le cercle unité ($|x_1| = 1$). L'origine est localement instable, alors que le cercle unité permet de réduire l'équation différentielle à une équation différentielle linéaire dont les solutions sont harmoniques avec une fréquence d'oscillation $\omega$ :

$$\dot{x}_1(t) = A x_1(t)$$

Des fonctions autres que la fonction h peuvent être utilisées pour générer l'impulsion périodique à partir de l'état de l'oscillateur - que ce soit l'émetteur 3 ou le récepteur 5 -, par exemple la fonction g ci-après :

$$g : \xi \longmapsto \begin{cases} \sigma \; si \; \arcsin(\xi_1) \geq \theta \\ 0 \; si \; \arcsin(\xi_1) < \theta \end{cases}$$

où : $\sigma$ et $\theta$ caractérisent l'amplitude et la largeur de l'impulsion périodique, avec notamment $\sigma > 0$ et $\theta \in [-\pi/2, \, \pi/2]$.

Toutefois, la fonction h présente l'avantage d'être continue, contrairement à la fonction g, ce qui est avantageux en présence de bruit, en particulier lorsque celui-ci est élevé. Étant donné que la présente invention est surtout destinée à être implémentée dans un environnement où le bruit est élevé, on utilise ci-après la fonction h pour générer l'impulsion périodique, que ce soit pour l'émetteur 3 ou le récepteur 5. En effet, la communication par lumière visible est particulièrement sensible aux bruits causés par la pollution lumineuse que ce soit à l'intérieur (éclairage artificiel) ou à l'extérieur (rayonnement solaire).

Comme illustré sur la [Fig. 1], l'impulsion périodique $y_1$ émise par la source lumineuse 7 de l'émetteur 3 est bruitée. Par conséquent, le photorécepteur 11 du récepteur 5 reçoit en réalité le signal y ci-après comprenant l'impulsion périodique d'entrée $y_1$ et un bruit v :

$$y = y_1 + v$$

La suite de la description adopte essentiellement le point de vue du récepteur 5 puisque c'est au récepteur 5 de se synchroniser avec l'émetteur 3. L'impulsion périodique $y_1$ est donc appelée impulsion périodique d'entrée tandis que l'impulsion périodique $y_2$ est appelée impulsion périodique de sortie.

En plus du photorécepteur 11 et de la source lumineuse 13, le récepteur 5 comprend également un circuit de traitement 15, une mémoire 17 et un processeur 19.

Par ailleurs, le récepteur 5 peut également comprendre un filtre (non représenté ici) agencé pour appliquer un pré-traitement au signal y reçu par le photorécepteur 11 pour en réduire le bruit. Un filtre passe-bas est particulièrement adapté, par exemple un filtre passe-bas gaussien ou un filtre passe-bas en sinus cardinal. Le filtre du récepteur 5 peut également être une combinaison de tels filtres passe-bas.

Le circuit de traitement 15 est agencé pour commander le récepteur 5 selon un mode de communication et un mode de synchronisation.

Le mode de communication est classique et correspond simplement à une communication par lumière visible entre le récepteur 5 et l'émetteur 3. Ce mode de communication implique au moins, pour le récepteur 5, la réception de signaux lumineux visibles par le photorécepteur 11 en provenance de l'émetteur 3. Dans le cas d'une communication bilatérale entre l'émetteur 3 et le récepteur 5, le mode de communication se manifeste alors en outre par l'émission de signaux lumineux visibles par la source lumineuse 13 à destination de l'émetteur 3.

Dans le mode de synchronisation, le circuit de traitement 15 est agencé pour générer l'impulsion périodique de sortie $y_2$ et mettre en œuvre une boucle d'asservissement de l'impulsion périodique de sortie $y_2$ au signal y reçu pour la synchronisation du récepteur 5 avec l'émetteur 3.

Le principe de la synchronisation est d'utiliser l'entrée de couplage $u_2$ pour permettre une convergence de l'impulsion périodique de sortie $y_2$ vers l'impulsion périodique d'entrée $y_1$ à partir du signal y reçu par le photorécepteur 11 :

$$y_2(t) \rightarrow y_1(t)$$

Étant donné que la même fonction h est utilisée pour générer l'impulsion périodique d'entrée $y_1$ au niveau de l'émetteur 3 et pour générer l'impulsion périodique de sortie $y_2$ au niveau du récepteur 5, le problème de synchronisation peut en fait se résumer à une convergence de l'état $x_2$ du récepteur 5 vers l'état $x_1$ de l'émetteur 3 :

$$x_2(t) \rightarrow x_1(t)$$

On peut alors définir l'erreur de synchronisation e du récepteur 5, avec $e \in \mathbb{R}^2$ : $e = [e_1 \ e_2]^T$, comme suit :

$$e = x_1 - x_2$$

Par ailleurs, les paramètres constants - donc indépendant du temps - sont identiques dans les équations différentielles décrivant les fonctionnements respectifs de l'émetteur 3 et du récepteur 5. Les solutions sont donc de même forme et ne diffèrent que par leur phase. Les phases respectives des états $x_1$ et $x_2$ conditionnent leur position sur le cycle limite. La synchronisation faisant l'objet de la présente invention revient donc à une synchronisation de phase et le circuit de traitement 15 est donc agencé pour synchroniser la phase du récepteur 5 avec celle de l'émetteur 3.

La mémoire 17 est agencée pour stocker des instructions dont la mise en œuvre, par le processeur 19, se traduit par le fonctionnement du récepteur 5. En particulier, de telles instructions permettent de mettre en œuvre la synchronisation du récepteur 5 avec l'émetteur 3.

La mémoire 17 peut également être agencée pour stocker des données reçues en provenance de l'émetteur 3 pendant la séquence de synchronisation ou pendant la communication par lumière visible. La mémoire 17 peut aussi stocker des informations ou des paramètres nécessaires à la communication ou à la synchronisation du récepteur 5 avec l'émetteur 3.

Par ailleurs, la mémoire 17 peut être agencée en outre pour stocker un registre de synchronisation. Un tel registre permet au récepteur 5 de conserver une information de synchronisation pour tout émetteur, par exemple l'émetteur 3, avec lequel le récepteur 5 est entré en communication.

La mémoire 17 peut désigner tout support de stockage de données agencé pour recevoir et conserver des données numériques, par exemple un disque dur, un disque à semi-conducteurs (plus connu sous l'acronyme anglophone SSD pour « *solid-state drive* ») ou plus généralement tout matériel informatique permettant le stockage de données sur de la mémoire flash. La mémoire 17 peut également être une mémoire vive ou encore un disque magnéto-optique. Une combinaison de plusieurs types de stockages de données peut aussi être envisagée.

Le processeur 19 peut être réalisé de toute manière connue, par exemple sous la forme d'un microprocesseur, d'un circuit logique programmable (plus connu sous l'acronyme anglophone PLD pour « *Programmable Logical Device* ») ou d'une puce dédiée de type FPGA (acronyme anglophone pour « *Field Programmable Gate Array* ») ou SoC (acronyme anglophone pour « *System on Chip* »), d'une grille de ressources informatiques, d'un microcontrôleur ou de toute autre forme propre disposant de la puissance de calcul nécessaire à la mise en œuvre du procédé de synchronisation décrit ci-après. Un ou plusieurs de ces éléments peuvent également être réalisés sous la forme de circuits électroniques spécialisés tel un ASIC (acronyme anglophone pour « *Application-Specific Integrated Circuit* »). Une combinaison de processeurs et de circuits électroniques peut aussi être envisagée.

Le procédé de synchronisation du récepteur 5 avec l'émetteur 3, et plus particulièrement le fonctionnement du circuit de traitement 15, va à présent être décrit en référence à la [Fig. 2].

Comme expliqué précédemment, ce procédé de synchronisation est avantageusement mis en œuvre préalablement à toute communication entre l'émetteur 3 et le récepteur 5 et fait alors office de préambule.

Lors d'une opération 210, le photorécepteur 11 du récepteur 5 reçoit le signal y en provenance de l'émetteur 3. Le signal y correspond à l'impulsion périodique d'entrée $y_1$ émise par la source lumineuse 7 et susceptible d'être corrompue par le bruit v.

Le signal y peut par ailleurs être prétraité par un filtre pour diminuer le bruit v.

Sur réception du signal y par le photorécepteur 11, le circuit de réception 15 commande alors le récepteur 5 selon le mode de synchronisation.

Le circuit de traitement 15 met ainsi en œuvre une boucle d'asservissement de l'impulsion périodique de sortie $y_2$ au signal y reçu.

Le début (t = 0) de la réception, par le récepteur 5, du signal y déclenche la séquence de synchronisation dont la durée T est prédéterminée. Par conséquent, tant que la période de temps de durée T consacrée à la synchronisation n'est pas écoulée, le circuit de traitement 15 asservit l'impulsion périodique de sortie $y_2$ au signal y reçu de manière à faire converger la phase du récepteur 5 vers la phase de l'émetteur 3. La boucle d'asservissement est interrompue à l'issue de cette période de temps (t ≥ T).

Lors d'une opération 220, le circuit de traitement 15 génère l'entrée de couplage $u_2$ à partir du signal y reçu. Avantageusement, l'entrée de couplage $u_2$ est générée non seulement à partir du signal y reçu mais aussi à partir de l'impulsion périodique de sortie.

L'entrée de couplage $u_2$ est par exemple le produit d'un gain de couplage L, avec $L \in \mathbb{R}^2$, et de la différence entre le signal y reçu et l'impulsion périodique de sortie $y_2$ :

$$u_2 = L(y - y_2)$$

Lors d'une opération 230, l'entrée de couplage $u_2$ est utilisée pour perturber le comportement du récepteur 5. Comme expliqué précédemment, le récepteur 5 est modélisé ici sous la forme d'un oscillateur d'Andronov-Hopf. La perturbation du comportement du récepteur 5 se traduit donc par une perturbation de l'espace des phases du récepteur 5. L'entrée de couplage $u_2$ peut être considérée comme une erreur de synchronisation directe injectée au niveau du récepteur 5. Pour rappel, l'équation différentielle caractérisant le comportement du récepteur 5 et l'évolution de son état $x_2$ est la suivante :

$$\dot{x}_2(t) = Ax_2(t) + \omega k(1 - |x_2(t)|^2)x_2(t) + u_2(t)$$

L'équation différentielle peut être réécrite comme suit en utilisant l'expression de l'entrée de couplage $u_2$ et la fonction h :

$$\dot{x}_2(t) = Ax_2(t) + \omega k(1 - |x_2(t)|^2)x_2(t) + L(h(x_1(t)) - h(x_2(t)) + v(t))$$

$$h(x_1(t)) - h(x_2(t)) = a[\tanh(\kappa(1 + x_{21}(t))) - \tanh(\kappa(1 + x_{11}(t)))]$$

Lors d'une opération 240, l'impulsion périodique de sortie $y_2$ est générée en fonction de l'état $x_2$ du récepteur 5. La génération de l'impulsion périodique de sortie $y_2$ est donc affectée par la perturbation de l'équation différentielle caractérisant le comportement du récepteur 5. On a alors :

$$y_2(t) = h(x_2(t)) = a(b - \tanh(\kappa(1 + x_{21}(t))))$$

Le procédé de synchronisation décrit précédemment et illustré sur la [Fig. 2] est mis en œuvre au cours de la période de temps dédiée à la synchronisation du récepteur 5 avec l'émetteur 3. Cette période de temps a une durée supérieure ou égale à la durée nécessaire pour faire converger de manière satisfaisante la phase du récepteur 5 vers la phase de l'émetteur 3, c'est-à-dire pour faire converger l'impulsion périodique de sortie $y_2$ vers l'impulsion périodique d'entrée $y_1$.

À l'issue de la synchronisation, le circuit de traitement 15 fait alors basculer le récepteur 5 du mode de synchronisation au mode de communication.

En modélisant le système 1 comme un système comprenant deux oscillateurs d'Andronov-Hopf couplés, les inventeurs ont découvert que des conditions spécifiques permettent un encadrement de l'erreur de synchronisation. Ces conditions et cet encadrement de l'erreur de synchronisation sont détaillés ci-après.

On considère le système 1 illustré sur la [Fig. 1] et comprenant deux oscillateurs d'Andronov-Hopf : l'émetteur 3 et le récepteur 5. Ces deux oscillateurs sont couplés et, avantageusement, seul l'espace des phases du récepteur 5 est perturbé par une entrée de couplage. On a donc :

$$u_1 = 0$$

$$u_2 = L(y - y_2)$$

Le signal y reçu par le récepteur 5 comprend l'impulsion périodique d'entrée $y_1$ et le bruit v :

$$y = y_1 + v$$

Comme expliqué précédemment, le bruit v est causé par une pollution lumineuse qui peut corrompre l'impulsion périodique d'entrée $y_1$ aussi bien en intérieur (éclairage artificiel) qu'en extérieur (rayonnement solaire). Le bruit v est borné et présente une borne supérieure de sorte que, pour tout instant $\tau$ :

$$|v(\tau)| \leq \overline{v}$$

L'émetteur 3 est caractérisé par l'état $x_1$ tandis que le récepteur 5 est caractérisé par l'état $x_2$. Les états $x_1$ et $x_2$ vérifient les conditions initiales suivantes :

$$|x_1(0)| = 1$$

$$\sqrt{0{,}5} \leq |x_2(0)| \leq 1{,}144$$

Comme mentionné précédemment, l'analyse de l'équation différentielle de l'émetteur 3 - donc avec une entrée de couplage identiquement nulle - met en évidence que le cercle unité ($|x_1| = 1$) est un ensemble compact et invariant. Par conséquent, la condition initiale $|x_1(0)| = 1$ implique que l'émetteur 3 a un comportement périodique.

En outre, de telles conditions sur l'émetteur 3 permettent de démontrer que, pour tout instant t : $|x_1(t)| = 1$. En effet, l'émetteur 3 présente une stabilité entrée-état (plus connue sous l'acronyme anglophone ISS pour *« input-to-state stability »*) sur l'union des ensembles compacts et invariants : $W = \{x_1 = 0\} \cup \{x_1 : |x_1| = 1\}$. Une démonstration, utilisant les fonctions de Lyapunov, peut être trouvée par exemple dans l'article de D. Angeli et D. Efimov intitulé « Characterizations of Input-to-State Stability for systems with multiple invariant sets » (IEEE Transactions on Automatic Control, vol. 60, No. 12, p. 3242-3256, décembre 2015).

Toujours concernant les conditions, on considère par ailleurs qu'il existe une matrice symétrique réelle définie positive P, des réels strictement positifs $\alpha$, $\rho$ et $\gamma$ et un réel $\beta$ tels que :

$$(A - \beta LC)^T P + P(A - \beta LC) + \varrho C^T C \leq -2\alpha P$$

$$-PL = C^T = [1\ 0]^T, P \leq \gamma I_2$$

$$\varrho = 2\left(\frac{2\gamma}{\alpha} + \frac{\rho}{\omega k}\right)|L|^2 a^2 \kappa^2$$

avec :

$$e_1(\tanh(\kappa(1 + x_{11} - e_1)) - \tanh(\kappa(1 + x_{11})) - \frac{\beta}{\alpha}e_1) \leq 0$$

pour tout $x_{11} \in$ [-1, 1] et pour tout $e_1$ tel que $|e_1| \leq 2,15$,
et :

$$\frac{|L|^2}{\omega^2 k^2}(4a^2 + \bar{v}^2) \leq \frac{1}{16}$$

où : - $P \in \mathbb{R}^{2 \times 2}$ , et

- $I_2$ est la matrice identité d'ordre 2.

Les inventeurs ont pu démontrer que ces conditions peuvent toujours être réunies - sauf à de rares exceptions - et permettent d'obtenir l'encadrement ci-après de l'erreur de synchronisation :

$$\lim_{t \to +\infty}|e(t)| \leq \sqrt{\frac{2\lambda_{min}^{-1}(P)(3\frac{\gamma}{\alpha} + \frac{\rho}{\omega k})}{\alpha\,min\left\{1, \frac{\rho\omega k}{2\gamma\omega k + \alpha\rho}\right\}}}|L|\bar{v}$$

où : $\lambda_{min}(P)$ est la plus petite valeur propre de la matrice P.
Un tel encadrement peut être démontré en utilisant des fonctions de Lyapunov.
En particulier, l'étude de la fonction de Lyapunov ci-après permet d'analyser le comportement de l'état $x_2$ du récepteur 5 :

$$W : x_2 \mapsto \frac{1}{2}(1 - |x_2|^2)^2$$

La dérivée de la fonction W peut être majorée pour mettre en évidence l'ensemble invariant vers l'avant - ou « *forward invariant* » - suivant :

$$X = \left\{x_2 \in \mathbb{R}^2 : \sqrt{0,5} \leq |x_2| \leq 1,144\right\}$$

Le choix d'une valeur initiale $x_2(0)$ dans cet ensemble X permet donc de maintenir $x_2(t)$ dans ce même ensemble X pour tout instant t. Cette condition est par exemple vérifiée avec $|x_2(0)|$ = 1.
Cette analyse permet également de démontrer que l'erreur de synchronisation est encadrée comme suit :

$$|e(t)| \leq 2,144$$

On peut ensuite utiliser la fonction de Lyapunov ci-après pour étudier la stabilité de l'erreur de synchronisation en majorant sa dérivée :

$$V : e \mapsto e^T P e$$

La dérivée de l'erreur de synchronisation peut s'exprimer comme suit :

$$\dot{e} = Ae - \omega k(1 - |x_2|^2)x_2 - L(y_1 + v - y_2)$$

La dérivée de la fonction V peut ensuite être majorée :

$$\dot{V} \leq -\alpha e^T P e - \varrho e^T C^T C e + \frac{2\gamma}{\alpha}(\omega^2 k^2 (1 - |x_2|^2)^2 |x_2|^2 + |L|^2 v^T v)$$

Enfin, une analyse de la dynamique combinée de l'erreur de synchronisation et de l'état $x_2$ du récepteur 5 permet de montrer que l'émetteur 3 et le récepteur 5 sont synchronisés sur le cercle unitaire avec une erreur de synchronisation proportionnelle à l'amplitude du bruit. Pour ce faire, un étudie la fonction de Lyapunov suivante :

$$U : (e, x_2) \mapsto V(e) + \left(\frac{2\gamma}{\alpha}\omega k + \rho\right) W(x_2)$$

Une telle analyse consiste une fois encore à majorer la dérivée de la fonction U et permet de trouver l'encadrement de l'erreur de synchronisation. On peut alors majorer la dérivée de la fonction U comme suit :

$$\dot{U} \leq -\alpha \min\left\{1, \frac{\rho\omega k}{2\gamma\omega k + \alpha\rho}\right\} U + 2|L|^2 (3\frac{\gamma}{\alpha} + \frac{\rho}{\omega k})\bar{v}^2$$

Les inventeurs ont également constaté qu'une condition moins exigeante sur l'inégalité matricielle était suffisante pour obtenir un comportement asymptotique de l'erreur de synchronisation au prix d'un encadrement moins avantageux. L'inégalité matricielle simplifiée est la suivante :

$$(A - \beta LC)^T P + P(A - \beta LC) \leq -2\alpha P$$

L'erreur de synchronisation est alors encadrée comme suit :

$$\lim_{t \to +\infty} |e(t)| \leq \sqrt{\frac{2\lambda_{min}^{-1}(P)\left(3\frac{\gamma}{\alpha} + \frac{\rho}{\omega k}\right)}{\alpha \min\left\{1, \frac{\rho\omega k}{2\gamma\omega k + \alpha\rho}\right\}}} |L|(\bar{v} + 2a)$$

La différence entre cette démonstration - avec l'inégalité matricielle moins exigeante - et la précédente réside essentiellement dans l'analyse du comportement de l'état $x_2$ du récepteur 5 à l'aide de la fonction de Lyapunov W :
Ainsi, dans le cas où on considère l'inégalité matricielle dans sa forme la plus exigeante, on utilise la majoration ci-après de la dérivée de la fonction W :

$$\dot{W} \leq -\omega k (1 - |x_2|^2)^2 |x_2|^2 + 2|L|^2 \frac{a^2 \kappa^2 e_1^T e_1 + v^T v}{\omega k}$$

En revanche, dans le cas où on considère l'inégalité matricielle dans sa forme la moins exigeante, on utilise la majoration ci-après de la dérivée de la fonction W :

$$\dot{W} \leq -\omega k (1 - |x_2|^2)^2 |x_2|^2 + \frac{2|L|^2}{\omega k}(4a^2 + \bar{v}^2)$$

De même, le changement dans l'inégalité matricielle induit une analyse légèrement différente de l'analyse de la stabilité de l'erreur de synchronisation. En particulier, on trouve alors la majoration ci-après de la dérivée de la fonction V :

$$\dot{V} \leq -\alpha e^T P e + \frac{2\gamma}{\alpha}(\omega^2 k^2 (1 - |x_2|^2)^2 |x_2|^2 + |L|^2 \bar{v}^2)$$

Enfin, la nouvelle analyse de la dynamique combinée de l'erreur de synchronisation et de l'état $x_2$ du récepteur 5

aboutit à la majoration ci-après de la dérivée de la fonction U :

$$\dot{U} \leq -\alpha\,min\left\{1, \frac{\rho\omega k}{2\gamma\omega k + \alpha\rho}\right\} U + 2|L|^2 \left(\left(3\frac{\gamma}{\alpha} + \frac{\rho}{\omega k}\right)(\bar{v}^2 + 4a^2)\right)$$

On trouve alors le nouvel encadrement de l'erreur de synchronisation, avec une borne supérieure plus élevée que dans le cas où les conditions à réunir sont plus contraignantes concernant l'inégalité matricielle.

A titre d'exemple, les valeurs ci-après permettent de réunir les conditions nécessaires pour obtenir l'encadrement de la valeur de synchronisation correspondant au cas dans lequel l'inégalité matricielle est moins exigeante :

$$\alpha = 0{,}01$$

$$\rho = 0{,}1$$

$$\beta = -10^{-5}$$

$$\gamma = 10^{-3}$$

$$\omega = {2\pi}/{T} \text{ avec } T = 4 \times 10^{-5}\, s$$

$$L = [-10^5\ 1]^T$$

$$\kappa = 5$$

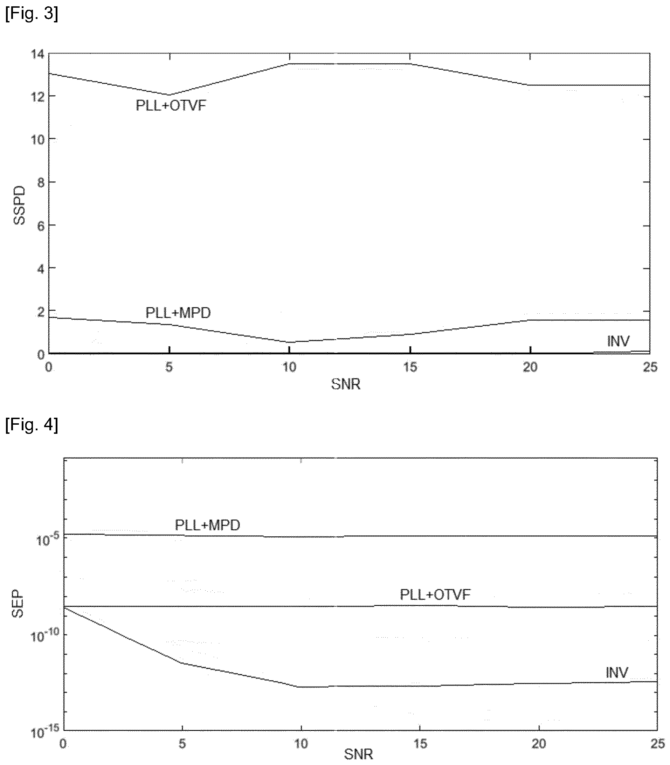

La [Fig. 3] et la [Fig. 4] illustrent les performances du procédé de synchronisation proposé par la présente invention en comparaison de deux méthodes fonctionnant sur le principe d'une boucle de phase asservie.

D'une manière générale, une boucle de phase asservie est un système de contrôle agencé pour aligner la phase d'un signal d'entrée sur la phase d'un signal de référence permettant la synchronisation symbole et la synchronisation entre un émetteur et un récepteur. D'une manière générale, une boucle de phase asservie comprend un oscillateur qui génère un signal périodique et un détecteur de phase - aussi appelé comparateur de phase - qui compare la phase de ce signal avec la phase du signal périodique d'entrée. La boucle de phase asservie maintient la correspondance des phases en ajustant le fonctionnement de l'oscillateur. Le principe d'une boucle de phase asservie est décrit plus en détail dans l'article « ALL Digital Phase-Locked Loop (ADPLL) : A Survey » (International Journal of Future Computer and Communication, Vol. 2, No. 6, décembre 2013) de K. Lata et M. Kumar.

Il est possible d'améliorer les performances de la boucle de phase asservie en utilisant un détecteur de phase de type multiplicateur ou des filtres optimaux, et plus précisément un filtre optimal variant dans le temps. Ce sont les deux techniques avec lesquelles le procédé de synchronisation faisant l'objet de la présente invention est comparé. Sur la [Fig. 3] et la [Fig. 4], la technique correspondant à une boucle de phase asservie combinée à un détecteur de phase de type multiplicateur est référencée PLL+MPD (« *Multiplier Phase Detector* »). La technique correspondant à une boucle de phase asservie combinée à un filtre optimal variant dans le temps est référencée PLL+OTVF (« *Optimum Time Varying Filtering* »). Enfin, le procédé de synchronisation faisant l'objet de l'invention est référencé INV.

Dans les courbes illustrées sur la [Fig. 3] et la [Fig. 4], l'axe des abscisses correspond au rapport signal sur bruit (plus souvent désigné par l'acronyme anglophone SNR pour « *signal-to-noise ratio* »). Le rapport signal sur bruit SNR dépend de la puissance S de la porteuse modulée reçue par le photorécepteur 11 du récepteur 5 et de la puissance N du bruit comprenant à la fois le bruit de grenaille généré par la source lumineuse 7 de l'émetteur 3 et le bruit thermique généré par les composants du récepteur 5.

Le rapport signal sur bruit SNR est alors :

$$SNR = \frac{S}{N}$$

Par ailleurs, les résultats illustrés sur la [Fig. 3] et la [Fig. 4] ont été obtenus avec une modulation 16 PPM - c'est-à-dire une modulation d'impulsions en position pour transmettre des symboles de 4 bits -, une impulsion périodique d'une durée de 50 μs (microsecondes) et une période d'échantillonnage de 500 ns (nanosecondes).

À ce titre, la [Fig. 3] illustre l'erreur de phase en régime permanent en fonction du bruit pour le procédé de synchronisation de la présente invention et les deux techniques utilisant une boucle de phase asservie. Plus précisément, l'axe des ordonnées correspond au retard de phase en régime permanent - ou retard de phase en état stable - (SSPD pour « *steady state phase delay* ») en degrés (°) tandis que l'axe des abscisses correspond au rapport signal sur bruit en décibels (dB).

On peut constater que la boucle de phase asservie utilisant un filtre optimal variant dans le temps génère un retard de phase en régime permanent très élevé, globalement supérieur à 12°. La boucle de phase asservie utilisant un détecteur de phase de type multiplicateur permet d'atteindre un retard de phase en régime permanent beaucoup plus faible, typiquement inférieur à 2°.

Toutefois, le procédé de synchronisation proposé surpasse ces deux techniques et permet d'atteindre un retard de phase en régime permanent très proche de 0°.

Enfin, la [Fig. 4] illustre la probabilité d'erreur de synchronisation (SEP pour « *synchronisation error probability* ») en fonction du bruit en décibels (dB) pour le procédé de synchronisation de la présente invention et les deux techniques utilisant une boucle de phase asservie.

On peut constater que la boucle de phase asservie utilisant un détecteur de phase multiplicateur génère une probabilité d'erreur de synchronisation de l'ordre de $10^{-5}$ tandis que la boucle de phase asservie utilisant un filtre optimal variant dans le temps génère une probabilité d'erreur de synchronisation supérieure à $10^{-9}$.

À l'inverse, le procédé de synchronisation proposé permet d'obtenir une probabilité d'erreur de synchronisation inférieure à $10^{-9}$. En outre, ce procédé a ceci d'avantageux qu'il est d'autant plus performant que le bruit est élevé. Ainsi, pour un rapport signal sur bruit de plus de 10 dB, la probabilité d'erreur de synchronisation reste inférieure à $10^{-12}$, et ce au moins jusqu'à un rapport signal sur bruit de 25 dB.

**Revendications**

1. Récepteur (5), agencé pour communiquer par lumière visible et se synchroniser avec un émetteur (3), comprenant :

   - un photorécepteur (11), et
   - un circuit de traitement (15) agencé pour commander le récepteur (5) selon un mode de communication et un mode de synchronisation,

   dans lequel, dans le mode de communication, le récepteur (5) est agencé pour communiquer par lumière visible avec l'émetteur (3) au moins par la réception de signaux lumineux visibles que le photorécepteur (11) est agencé pour recevoir en provenance de l'émetteur (3),

   - dans le mode de synchronisation, le récepteur (5) est agencé pour se synchroniser avec l'émetteur (3) par la génération d'impulsions périodiques de sortie à partir d'impulsions périodiques d'entrée émises par l'émetteur (3),

   **caractérisé en ce que**, lesdites impulsions périodiques d'entrée et de sortie étant caractéristiques, respectivement pour l'émetteur (3) et le récepteur (5), du comportement d'un oscillateur d'Andronov-Hopf, et **en ce que**, dans ledit mode de synchronisation :

   le photorécepteur (11) est agencé pour recevoir un signal correspondant à une impulsion périodique d'entrée émise par l'émetteur (3) et susceptible d'être corrompue par un bruit, et le circuit de traitement (15) est agencé pour perturber le comportement du récepteur (5) avec une entrée de couplage générée à partir du signal reçu et pour générer une impulsion périodique de sortie par la mise en œuvre d'une boucle d'asservissement de ladite impulsion périodique de sortie au signal reçu pour la synchronisation de la phase du récepteur (5) avec celle de l'émetteur (3).

2. Récepteur (5) selon la revendication 1, **caractérisé en ce qu'**il comprend en outre un filtre agencé pour appliquer un pré-traitement au signal reçu par le photorécepteur (11) pour en diminuer le bruit.

3. Récepteur (5) selon la revendication 1 ou 2, **caractérisé en ce que** le comportement du récepteur (5) est **caractérisé par** un état variant sensiblement selon l'équation différentielle ci-après :

$$\dot{x}_2(t) = Ax_2(t) + \omega k(1 - |x_2(t)|^2)x_2(t) + u_2(t)$$

avec :

$$A = \begin{bmatrix} 0 & \omega \\ -\omega & 0 \end{bmatrix}$$

où : - $x_2(t)$ est l'état du récepteur (5) à un instant t, avec $x_2 \in \mathbb{R}^2$ : $x_2 = [x_{21}\ x_{22}]^T$,

- $\omega$ est la fréquence d'oscillation strictement positive,
- k est le gain d'attraction strictement positif, et

- $u_2(t)$ est l'entrée de couplage à l'instant t, avec $u_2 \in \mathbb{R}^2$.

**4.** Récepteur (5) selon la revendication 3, **caractérisé en ce que** le circuit de traitement (15) est agencé pour générer l'impulsion périodique de sortie ci-après :

$$y_2(t) = h\big(x_2(t)\big)$$

avec :

$$h: \xi \longmapsto a\big(b - \tanh\big(\kappa(1 + \xi_1)\big)\big)$$

où : - $y_2(t)$ est l'impulsion périodique de sortie à l'instant t,

- a et b sont des réels strictement positifs caractérisant l'amplitude de l'impulsion périodique de sortie,
- $\kappa$ est un réel strictement positif caractérisant la largeur de l'impulsion périodique de sortie, et
- $\xi$ est un vecteur bidimensionnel quelconque : $\xi = [\xi_1\ \xi_2]^T$

**5.** Récepteur (5) selon la revendication 3 ou 4, **caractérisé en ce que** l'entrée de couplage perturbant le comportement du récepteur (5) est le produit d'un gain de couplage et de la différence entre le signal reçu et l'impulsion périodique de sortie :

$$u_2(t) = L(y(t) - y_2(t))$$

où : - L est le gain de couplage, avec $L \in \mathbb{R}^2$,

- y(t) est le signal reçu par le récepteur (5) à l'instant t, et
- $y_2(t)$ est l'impulsion périodique de sortie à l'instant t.

**6.** Système (1) comprenant :

- un récepteur (5) selon les revendications 4 et 5 prises en combinaison, et
- un émetteur (3) avec lequel ledit récepteur (5) est agencé, dans le mode de communication, pour communiquer par lumière visible et, dans le mode de synchronisation, pour se synchroniser.

**7.** Système (1) selon la revendication 6, **caractérisé en ce que**, parmi l'émetteur (3) et le récepteur (5), seul le comportement du récepteur (5) est perturbé par l'autre, le comportement de l'émetteur (3) étant **caractérisé par** un état variant sensiblement selon l'équation différentielle ci-après :

$$\dot{x}_1(t) = Ax_1(t) + \omega k(1 - |x_1(t)|^2)x_1(t)$$

où : $x_1(t)$ est l'état de l'émetteur (3) à un instant t, avec $x_1 \in \mathbb{R}^2$ : $x_1 = [x_{11}\ x_{12}]^T$.

8. Système (1) selon la revendication 7, **caractérisé en ce que** l'émetteur (3) est agencé pour émettre l'impulsion périodique d'entrée ci-après :

$$y_1(t) = h\big(x_1(t)\big)$$

où : $y_1(t)$ est l'impulsion périodique d'entrée à l'instant t, de sorte que, dans le mode de synchronisation, le signal reçu par le photorécepteur (11) en provenance de l'émetteur (3) est le suivant :

$$y(t) = y_1(t) + v(t)$$

où : - y(t) est le signal reçu par le photorécepteur (11) à l'instant t, et

- v(t) est un bruit borné à l'instant t, avec $|v(\tau)| \leq \bar{v}$ pour tout instant $\tau$.

9. Système (1) selon la revendication 8, **caractérisé en ce que** l'état caractérisant le comportement de l'émetteur (3) vérifie la condition initiale ci-après :

$$|x_1(0)| = 1$$

**en ce que** l'état caractérisant le comportement du récepteur (5) vérifie la condition initiale ci-après :

$$\sqrt{0{,}5} \leq |x_2(0)| \leq 1{,}144$$

et **en ce qu'**il existe une matrice symétrique réelle définie positive P, des réels strictement positifs $\alpha$, $\rho$ et $\gamma$ et un réel $\beta$ tels que :

$$(A - \beta LC)^T P + P(A - \beta LC) \leq -2\alpha P$$

$$-PL = C^T = [1\ 0]^T, P \leq \gamma I_2$$

avec :

$$e_1(\tanh\left(\kappa(1 + x_{11} - e_1)\right) - \tanh\big(\kappa(1 + x_{11})\big) - \frac{\beta}{\alpha} e_1) \leq 0$$

pour tout $x_{11} \in [\text{-}1,1]$ et pour tout $e_1$ tel que $|e_1| \leq 2{,}15$,
et **en ce que** :

$$\frac{|L|^2}{\omega^2 k^2}(4a^2 + \bar{v}^2) \leq \frac{1}{16}$$

où : - $P \in \mathbb{R}^{2 \times 2}$,

- $I_2$ est la matrice identité d'ordre 2, et

- e est l'erreur de synchronisation du récepteur (5), avec $e \in \mathbb{R}^2$ : $e = x_1 - x_2 = [e_1\ e_2]^T$.

10. Système (1) selon la revendication 9, **caractérisé en ce que** :

$$\alpha = 0,01$$

$$\rho = 0,1$$

$$\beta = -10^{-5}$$

$$\gamma = 10^{-3}$$

$$\omega = {2\pi}/{T} \text{ avec } T = 4 \times 10^{-5} \text{ s}$$

$$L = [-10^5 \ 1]^T$$

$$\kappa = 5$$

**11.** Système (1) selon la revendication 9, **caractérisé en ce que** :

$$(A - \beta LC)^T P + P(A - \beta LC) + \varrho C^T C \leq -2\alpha P$$

avec :

$$\varrho = 2(\frac{2\gamma}{\alpha} + \frac{\rho}{\omega k})|L|^2 a^2 \kappa^2$$

**12.** Système (1) selon l'une des revendications 6 à 11, **caractérisé en ce que**, dans le mode de communication, le récepteur (5) est agencé pour communiquer par lumière visible avec l'émetteur (3) selon une modulation d'impulsions en position.

**13.** Procédé de synchronisation d'un récepteur (5) avec un émetteur (3) par la génération d'impulsions périodiques de sortie à partir d'impulsions périodiques d'entrée émises par l'émetteur (3), lesdites impulsions périodiques d'entrée et de sortie étant caractéristiques, respectivement pour l'émetteur (3) et le récepteur (5), du comportement d'un oscillateur d'Andronov-Hopf, ledit récepteur (5) étant agencé, dans un mode de communication, pour communiquer par lumière visible avec l'émetteur (3), ledit procédé étant mis en œuvre par le récepteur (5) dans un mode de synchronisation et comprenant :

- recevoir (210) un signal reçu en provenance de l'émetteur (3), ledit signal correspondant à une impulsion périodique d'entrée émise par l'émetteur (3) et susceptible d'être corrompue par un bruit,
- perturber (230) le comportement du récepteur (5) avec une entrée de couplage générée (220) à partir du signal reçu, et
- générer (240) une impulsion périodique de sortie par la mise en œuvre d'une boucle d'asservissement de ladite impulsion périodique de sortie au signal reçu pour la synchronisation de la phase du récepteur (5) avec la phase de l'émetteur (3).

**14.** Procédé selon la revendication 13, **caractérisé en ce que** le mode de synchronisation précède le mode de communication.

**15.** Programme informatique, comprenant des instructions pour la mise en œuvre du procédé selon la revendication 13 ou 14, lorsque lesdites instructions sont exécutées par au moins un processeur (19) appartenant à un récepteur selon l'une quelconque des revendications 1 à 5.

**Patentansprüche**

1. Empfänger (5), der dazu ausgebildet ist, über sichtbares Licht zu kommunizieren und sich mit einem Sender (3) zu synchronisieren, umfassend:

   - einen Fotoempfänger (11), und
   - eine Verarbeitungsschaltung (15), die dazu ausgebildet ist, den Empfänger (5) gemäß einem Kommunikationsmodus und einem Synchronisationsmodus zu steuern,
   wobei der Empfänger (5) in dem Kommunikationsmodus dazu ausgebildet ist, über sichtbares Licht mit dem Sender (3) mindestens durch das Empfangen von sichtbaren Lichtsignalen zu kommunizieren, zu deren Empfang von dem Sender (3) der Photoempfänger (11) ausgebildet ist,
   - wobei der Empfänger (5) in dem Synchronisationsmodus dazu ausgebildet ist, sich mit dem Sender (3) durch das Erzeugen von periodischen Ausgangsimpuls ausgehend von den von dem Sender (3) gesendeten periodischen Eingangsimpulsen zu synchronisieren,
   **dadurch gekennzeichnet, dass** die periodischen Eingangs- und Ausgangsimpulse bei dem Sender (3) beziehungsweise dem Empfänger (5) für das Verhalten eines Andronov-Hopf-Oszillators kennzeichnend sind, und dass, in dem Synchronisationsmodus:

   der Photoempfänger (11) dazu ausgebildet ist, ein Signal zu empfangen, das einem periodischen Eingangsimpuls entspricht, der von dem Sender (3) gesendet wird und durch ein Rauschen korrumpiert werden kann, und
   die Verarbeitungsschaltung (15) dazu ausgebildet ist, das Verhalten des Empfängers (5) mit einem Kopplungseingang zu stören, der ausgehend von dem empfangenen Signals erzeugt wird, und einen periodischen Ausgangsimpuls zu erzeugen durch Implementierung einer Schleife zur Rückkopplung des periodischen Ausgangsimpulses auf das empfangene Signal zur Synchronisation der Phase des Empfängers (5) mit der des Senders (3).

2. Empfänger (5) nach Anspruch 1, **dadurch gekennzeichnet, dass** er ferner ein Filter umfasst, das dazu ausgebildet ist, eine Vorverarbeitung auf das von dem Photoempfänger (11) empfangene Signal anzuwenden, um dessen Rauschen zu verringern.

3. Empfänger (5) nach Anspruch 1 oder 2, **dadurch gekennzeichnet, dass** das Verhalten des Empfängers (5) durch einen Zustand gekennzeichnet ist, der im Wesentlichen gemäß der folgenden Differentialgleichung variiert:

$$\dot{x}_2(t) = Ax_2(t) + \omega k(1 - |x_2(t)|^2)x_2(t) + u_2(t)$$

mit:

$$A = \begin{bmatrix} 0 & \omega \\ -\omega & 0 \end{bmatrix}$$

worin: - $x_2(t)$ der Zustand des Empfängers (5) zu einem Zeitpunkt t ist, mit $x_2 \in \mathbb{R}^2$ : $x_2 = [x_{21}\ x_{22}]^T$,

   - $\omega$ die strikt positive Oszillationsfrequenz ist,
   - k die strikt positive Anziehungsverstärkung ist, und

   - $u_2(t)$ der Kopplungseingang zum Zeitpunkt t ist, mit $u_2 \in \mathbb{R}^2$.

4. Empfänger (5) nach Anspruch 3, **dadurch gekennzeichnet, dass** die Verarbeitungsschaltung (15) dazu ausgebildet ist, den folgenden periodischen Ausgangsimpuls zu erzeugen:

$$y_2(t) = h(x_2(t))$$

mit:

$$h: \xi \longmapsto a\big(b - \tanh\big(\kappa(1 + \xi_1)\big)\big)$$

worin: - $y_2(t)$ der periodische Ausgangsimpuls zum Zeitpunkt t ist,

- a und b strikt positive Realwerte sind, die die Amplitude des periodischen Ausgangsimpulses kennzeichnen,
- $\kappa$ ein strikt positiver Realwert ist, der die Breite des periodischen Ausgangsimpulses kennzeichnet, und
- $\xi$ ein beliebiger zweidimensionaler Vektor ist:

$$\xi = [\xi_1 \; \xi_2]^T$$

5. Empfänger (5) nach Anspruch 3 oder 4, **dadurch gekennzeichnet, dass** der Kopplungseingang, der das Verhalten des Empfängers (5) stört, das Produkt aus einer Kopplungsverstärkung und der Differenz zwischen dem empfangenen Signal und dem periodischen Ausgangsimpuls ist:

$$u_2(t) = L(y(t) - y_2(t))$$

worin: - L die Kopplungsverstärkung ist, mit $L \in \mathbb{R}^2$ ,

- $y(t)$ das von dem Empfänger (5) zum Zeitpunkt t empfangene Signal ist, und
- $y_2(t)$ der periodische Ausgangsimpuls zum Zeitpunkt t ist.

6. System (1), umfassend:

- einen Empfänger (5) nach den Ansprüchen 4 und 5 in Kombination miteinander und
- einen Sender (3), mit dem der Empfänger (5) ausbildungsgemäß im Kommunikationsmodus über sichtbares Licht kommuniziert und sich im Synchronisationsmodus synchronisiert.

7. System (1) nach Anspruch 6, **dadurch gekennzeichnet, dass** unter dem Sender (3) und dem Empfänger (5) nur das Verhalten des Empfängers (5) durch den anderen gestört wird, wobei das Verhalten des Senders (3) durch einen Zustand gekennzeichnet ist, der im Wesentlichen nach der folgenden Differentialgleichung variiert:

$$\dot{x}_1(t) = Ax_1(t) + \omega k(1 - |x_1(t)|^2)x_1(t)$$

worin: $x_1(t)$ der Zustand des Senders (3) zu einem Zeitpunkt t ist, mit $x_1 \in \mathbb{R}^2$ : $x_1 = [x_{11} \; x_{12}]^T$.

8. System (1) nach Anspruch 7, **dadurch gekennzeichnet, dass** der Sender (3) dazu ausgebildet ist, den folgenden periodischen Eingangsimpuls zu senden:

$$y_1(t) = h\big(x_1(t)\big)$$

worin: $y_1(t)$ der periodische Eingangsimpuls zum Zeitpunkt t ist,
so dass, im Synchronisationsmodus, das von dem Photoempfänger (11) von dem Sender (3) empfangene Signal das folgende ist:

$$y(t) = y_1(t) + v(t)$$

worin: - $y(t)$ das von dem Photoempfänger (11) zum Zeitpunkt t empfangene Signal ist, und

- $v(t)$ ein auf den Zeitpunkt t begrenztes Rauschen ist, mit $|v(\tau)| \leq \bar{v}$ für jeden Zeitpunkt $\tau$.

9. System (1) nach Anspruch 8, **dadurch gekennzeichnet, dass** der Zustand, der das Verhalten des Senders (3) kennzeichnet, die folgende Ausgangsbedingung erfüllt:

$$|x_1(0)| = 1$$

dass der Zustand, der das Verhalten des Empfängers (5) kennzeichnet, die folgende Ausgangsbedingung erfüllt:

$$\sqrt{0,5} \leq |x_2(0)| \leq 1,144$$

und dass es eine positive definierte reale symmetrische Matrix P, strikt positive Realwerte $\alpha$, $\rho$ und $\gamma$ und einen Realwert $\beta$ gibt, so dass:

$$(A - \beta LC)^T P + P(A - \beta LC) \leq -2\alpha P$$

$$-PL = C^T = [1\ 0]^T, P \leq \gamma I_2$$

mit:

$$e_1(\tanh(\kappa(1 + x_{11} - e_1)) - \tanh(\kappa(1 + x_{11})) - \frac{\beta}{\alpha}e_1) \leq 0$$

für jedes $x_{11} \in [-1,1]$ und für jedes $e_1$, so dass $|e_1| \leq 2{,}15$, und dass:

$$\frac{|L|^2}{\omega^2 k^2}(4a^2 + \bar{v}^2) \leq \frac{1}{16}$$

worin: - $P \in \mathbb{R}^{2 \times 2}$,

- $I_2$ die Identitätsmatrix 2. Ordnung ist, und

- e der Synchronisationsfehler des Empfängers (5) ist, mit $e \in \mathbb{R}^2$ : e = $x_1$ - $x_2$ = $[e_1\ e_2]^T$.

**10.** System (1) nach Anspruch 9, **dadurch gekennzeichnet, dass**:

$$\alpha = 0{,}01$$

$$\rho = 0{,}1$$

$$\beta = -10^{-5}$$

$$\gamma = 10^{-3}$$

$$\omega = \frac{2\pi}{T} \text{ mit } T = 4 \times 10^{-5}\ s$$

$$L = [-10^5\ 1]^T$$

$$\kappa = 5$$

**11.** System (1) nach Anspruch 9, **dadurch gekennzeichnet, dass**:

$$(A - \beta LC)^T P + P(A - \beta LC) + \varrho C^T C \leq -2\alpha P$$

mit:

$$\varrho = 2(\frac{2\gamma}{\alpha} + \frac{\rho}{\omega k})|L|^2 a^2 \kappa^2$$

12. System (1) nach einem der Ansprüche 6 bis 11, **dadurch gekennzeichnet, dass** im Kommunikationsmodus der Empfänger (5) dazu ausgebildet ist, mit dem Sender (3) über sichtbares Licht gemäß einer Puls-Pausen-Modulation zu kommunizieren.

13. Verfahren zur Synchronisation eines Empfängers (5) mit einem Sender (3) durch die Erzeugung von periodischen Ausgangsimpulsen ausgehend von den von dem Sender (3) gesendeten periodischen Eingangsimpulsen, wobei die periodischen Eingangs- und Ausgangsimpulse bei dem Sender (3) beziehungsweise dem Empfänger (5) kennzeichnend für das Verhalten eines Andronov-Hopf-Oszillators sind, wobei der Empfänger (5) in einem Kommunikationsmodus dazu ausgebildet ist, mit dem Sender (3) über sichtbares Licht zu kommunizieren, wobei das Verfahren von dem Empfänger (5) in einem Synchronisationsmodus implementiert wird und Folgendes umfasst:

- Empfangen (210) eines Signals, das von dem Sender (3) empfangen wird, wobei das Signal einem periodischen Eingangsimpuls entspricht, der von dem Sender (3) gesendet wird und durch ein Rauschen korrumpiert werden kann,
- Stören (230) des Verhaltens des Empfängers (5) mit einem Kopplungseingang, der ausgehend von dem empfangenen Signal erzeugt (220) wird, und
- Erzeugen (240) eines periodischen Ausgangsimpulses durch Implementierung einer Schleife zur Rückkopplung des periodischen Ausgangsimpulses auf das empfangene Signal zur Synchronisation der Phase des Empfängers (5) mit der Phase des Senders (3).

14. Verfahren nach Anspruch 13, **dadurch gekennzeichnet, dass** der Synchronisationsmodus dem Kommunikationsmodus vorausgeht.

15. Computerprogramm, das Anweisungen umfasst, die das Verfahren nach Anspruch 13 oder 14 implementieren, wenn die Anweisungen von mindestens einem Prozessor (19) ausgeführt werden, der zu einem Empfänger nach einem der Ansprüche 1 bis 5 gehört.

**Claims**

1. A receiver (5) configured to communicate via visible light and to synchronise with a transmitter (3), including:

- a photoreceptor (11), and
- a processing circuit (15) configured to control the receiver (5) according to a communication mode and a synchronisation mode,
wherein, in the communication mode, the receiver (5) is configured to communicate via visible light with the transmitter (3) at least via the reception of visible light signals that the photoreceptor (11) is configured to receive from the transmitter (3),
- in the synchronisation mode, the receiver (5) is configured to synchronise with the transmitter (3) via the generation of periodic output pulses based on periodic input pulses emitted by the transmitter (3),
**characterised in that** said periodic input and output pulses are characteristic, respectively for the transmitter (3) and the receiver (5), of the behaviour of an Andronov-Hopf oscillator,
and **in that**, in said synchronisation mode:

the photoreceiver (11) is configured to receive a signal that corresponds to a periodic input pulse emitted by the transmitter (3) and that is susceptible to being corrupted by noise, and
the processing circuit (15) is configured to disrupt the behaviour of the receiver (5) with a coupling input generated based on the received signal and to generate a periodic output pulse via the implementation of a phase-locked loop that fixes said periodic output pulse relative to the phase of the received signal in order to synchronise the phase of the receiver (5) with that of the transmitter (3) .

2. A receiver (5) according to claim 1, **characterised in that** it further includes a filter configured to apply a pre-processing to the signal received by the photoreceptor (11) in order to reduce its noise.

3. A receiver (5) according to claim 1 or 2, **characterised in that** the behaviour of the receiver (5) is **characterised by** a state that varies essentially according to the following differential equation:

$$\dot{x}_2(t) = Ax_2(t) + \omega k(1 - |x_2(t)|^2)x_2(t) + u_2(t)$$

with:

$$A = \begin{bmatrix} 0 & \omega \\ -\omega & 0 \end{bmatrix}$$

where: - $x_2$(t) is the state of the receiver (5) at a time t, with $x_2 \in \mathbb{R}^2$ : $x_2$ = $[x_{21}\ x_{22}]^T$,

   - w is the strictly positive oscillation frequency,
   - k is the strictly positive attraction gain, and

   - $u_2$(t) is the coupling input at time t, with $u_2 \in \mathbb{R}^2$ .

4. A receiver (5) according to claim 3, **characterised in that** the processing circuit (15) is configured to generate the following periodic output pulse:

$$y_2(t) = h\big(x_2(t)\big)$$

with:

$$h: \xi \longmapsto a(b - \tanh\big(\kappa(1 + \xi_1)\big))$$

where: - $y_2$(t) is the periodic output pulse at time t,

   - a and b are strictly positive real numbers that characterise the amplitude of the periodic output pulse,
   - $\kappa$ is a strictly positive real number that characterises the width of the periodic output pulse, and
   - $\xi$ is any two-dimensional vector: $\xi = [\xi_1\ \xi_2]^T$

5. A receiver (5) according to claim 3 or 4, **characterised in that** the coupling input that disrupts the behaviour of the receiver (5) is the product of a coupling gain and the difference between the received signal and the periodic output pulse:

$$u_2(t) = L(y(t) - y_2(t))$$

where: - L is the coupling gain, with $L \in \mathbb{R}^2$ ,

   - y(t) is the signal received by the receiver (5) at time t, and
   - $y_2$(t) is the periodic output pulse at time t.

6. A system (1) including:

   - a receiver (5) according to claims 4 and 5 taken in combination, and
   - a transmitter (3) with which said receiver (5) is configured, in the communication mode, to communicate via visible light and, in the synchronisation mode, to be synchronised.

7. A system (1) according to claim 6, **characterised in that**, between the transmitter (3) and the receiver (5), only the behaviour of the receiver (5) is disrupted by the other element, the behaviour of the transmitter (3) being **char-**

**acterised by** a state that varies essentially according to the following differential equation:

$$\dot{x}_1(t) = Ax_1(t) + \omega k(1 - |x_1(t)|^2)x_1(t)$$

where: $x_1(t)$ is the state of the transmitter (3) at a time t, with $x_1 \in \mathbb{R}^2$ : $x_1 = [x_{11}\ x_{12}]^T$.

8. A system (1) according to claim 7, **characterised in that** the transmitter (3) is configured to transmit the following periodic input pulse:

$$y_1(t) = h(x_1(t))$$

where: $y_1(t)$ is the periodic input pulse at time t,
so that, in the synchronisation mode, the signal received by the photoreceptor (11) from the transmitter (3) is as follows:

$$y(t) = y_1(t) + v(t)$$

where: - y(t) is the signal received by the photoreceptor (11) at time t, and

- v(t) is a noise confined to time t, with $|v(\tau)| \leq \bar{v}$ for all times $\tau$.

9. A system (1) according to claim 8, **characterised in that** the state that characterises the behaviour of the transmitter (3) satisfies the following initial condition:

$$|x_1(0)| = 1$$

and **in that** the state that characterises the behaviour of the receiver (5) satisfies the following initial condition:

$$\sqrt{0.5} \leq |x_2(0)| \leq 1.144$$

and **in that** there exist a positive-definite real symmetric matrix P, strictly positive real numbers $\alpha$, $\rho$ and $\gamma$, and a real number $\beta$ such that:

$$(A - \beta LC)^T P + P(A - \beta LC) \leq -2\alpha P$$

$$-PL = C^T = [1\ 0]^T, P \leq \gamma I_2$$

with:

$$e_1(\tanh(\kappa(1 + x_{11} - e_1)) - \tanh(\kappa(1 + x_{11})) - \frac{\beta}{\alpha}e_1) \leq 0$$

for all $x_{11} \in [-1,1]$ and for all $e_1$ such that $|e_1| \leq 2.15$,
and **in that**:

$$\frac{|L|^2}{\omega^2 k^2}(4a^2 + \bar{v}^2) \leq \frac{1}{16}$$

where: - $P \in \mathbb{R}^{2\times 2}$ ,

- $I_2$ is the identity matrix of order 2, and
- e is the synchronisation error of the receiver (5), with $e \in \mathbb{R}^2$ : $e = x_1 - x_2 = [e_1\ e_2]^T$.

**10.** A system (1) according to claim 9, **characterised in that**:

$$\alpha = 0.01$$

$$\rho = 0.1$$

$$\beta = -10^{-5}$$

$$\gamma = 10^{-3}$$

$$\omega = {2\pi}/{T} \text{ with } T = 4 \times 10^{-5} \text{ s}$$

$$L = [-10^5 \ 1]^T$$

$$\kappa = 5$$

**11.** A system (1) according to claim 9, **characterised in that**:

$$(A - \beta LC)^T P + P(A - \beta LC) + \varrho C^T C \le -2\alpha P$$

with:

$$\varrho = 2(\frac{2\gamma}{\alpha} + \frac{\rho}{\omega k})|L|^2 a^2 \kappa^2$$

**12.** A system (1) according to one of claims 6 to 11, **characterised in that**, in the communication mode, the receiver (5) is configured to communicate via visible light with the transmitter (3) according to a pulse-position modulation.

**13.** A method for synchronising a receiver (5) with a transmitter (3) via the generation of periodic output pulses based on periodic input pulses emitted by the transmitter (3), wherein said periodic input and output pulses are characteristic, respectively for the transmitter (3) and the receiver (5), of the behaviour of an Andronov-Hopf oscillator, wherein said receiver (5) is configured, in a communication mode, to communicate via visible light with the transmitter (3), wherein said method is implemented by the receiver (5) in a synchronisation mode and includes:

- receiving (210) a received signal from the transmitter (3), wherein said signal corresponds to a periodic input pulse emitted by the transmitter (3) and is susceptible to being corrupted by noise,
- disrupting (230) the behaviour of the receiver (5) with a coupling input generated (220) based on the received signal, and
- generating (240) a periodic output pulse via the implementation of a phase-locked loop that fixes said periodic output pulse relative to the phase of the received signal in order to synchronise the phase of the receiver (5) with the phase of the transmitter (3).

**14.** A method according to claim 13, **characterised in that** the synchronisation mode precedes the communication mode.

**15.** A computer program including instructions for implementing the method according to claim 13 or 14 when said instructions are executed by at least one processor (19) belonging to a receiver according to any of claims 1 to 5.

[Fig. 1]

[Fig. 2]

[Fig. 3]

[Fig. 4]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **CANYELLES-PERICAS PEP**. *Chaos synchronization on Visible Light Communication with application for secure data Communications*
- **E. PANTELEY** ; **A. LORÍA**. Analysis and control of Andronov-Hopf oscillators with applications to neuronal populations. *2015 IEEE 54th Annual Conference on Decision and Control (CDC)*, 596-601
- **D. ANGELI** ; **D. EFIMOV**. Characterizations of Input-to-State Stability for systems with multiple invariant sets. *IEEE Transactions on Automatic Control*, December 2015, vol. 60 (12), 3242-3256
- **K. LATA** ; **M. KUMAR**. ALL Digital Phase-Locked Loop (ADPLL) : A Survey. *International Journal of Future Computer and Communication*, December 2013, vol. 2 (6)